(19) Europäisches Patentamt
European Patent Office
Office européen des brevets

(11) EP 2 628 994 A1

(12) **EUROPÄISCHE PATENTANMELDUNG**

(43) Veröffentlichungstag:
**21.08.2013 Patentblatt 2013/34**

(51) Int Cl.:
***F17C 1/06*** *(2006.01)* ***F17C 1/16*** *(2006.01)*
***B29C 53/60*** *(2006.01)* ***B29C 63/24*** *(2006.01)*

(21) Anmeldenummer: **12155440.6**

(22) Anmeldetag: **14.02.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Lanxess Deutschland GmbH**
**51369 Leverkusen (DE)**

(72) Erfinder:
- **Schulte, Maik**
  **58119 Hagen (DE)**
- **Krause, Frank**
  **51469 Bergisch-Gladbach (DE)**

(54) **Kunststoffliner mit Fixierungselementen für Druckbehälter**

(57) Die Erfindung betrifft Druckbehälter bestehend aus einem innenliegenden Kunststoffliner der mit einer äußeren Verstärkungsschicht z.B. einem faserverstärkten Material oder Metall als Außenhülle versehen ist, wobei der innenliegende Kunststoffliner mit Fixierungselementen versehen ist.

Fig. 1

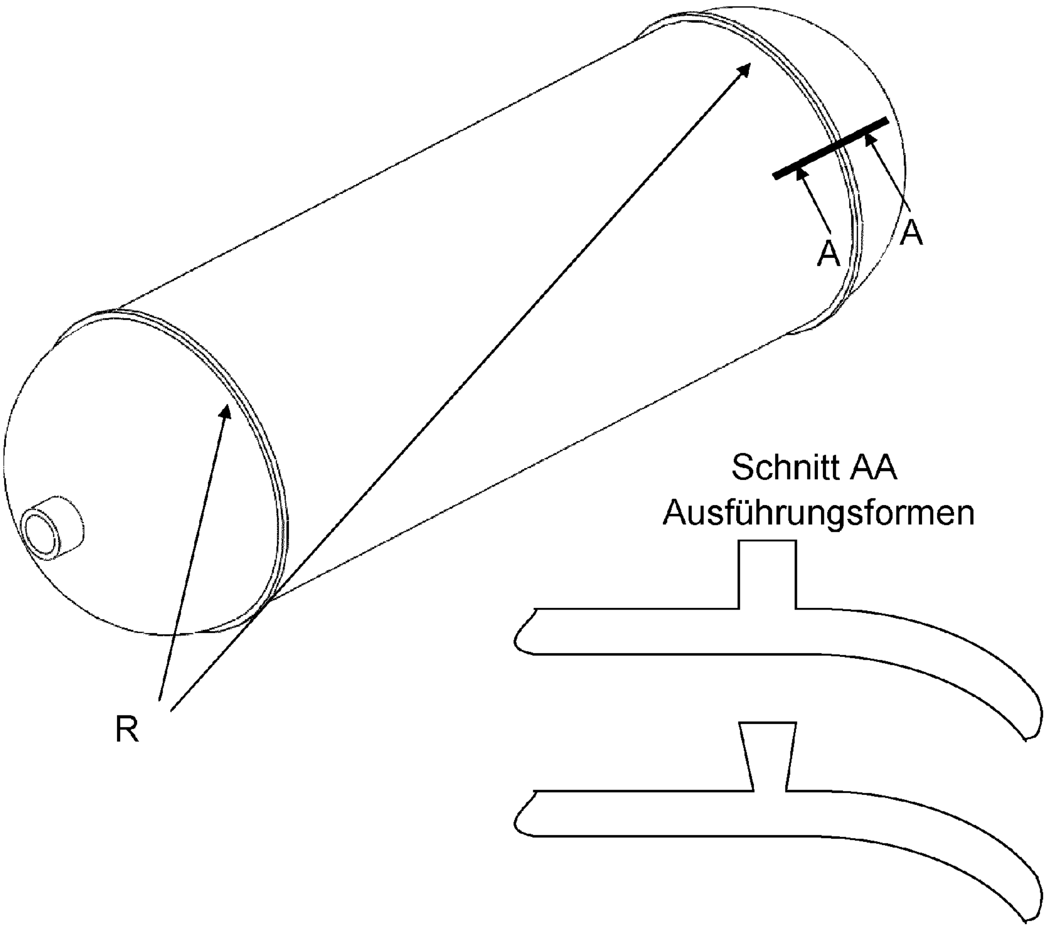


EP 2 628 994 A1

## Beschreibung

Die Erfindung betrifft Druckbehälter bestehend aus einem innenliegenden Kunststoffliner, der mit einer äußeren Verstärkungsschicht z.B. einem faserverstärkten Material (z.B. Kohle- und/oder Glasfasern) oder Metall (entweder als flächiges Blech oder als Metallgerüst) als Außenhülle versehen ist, wobei der innenliegende Kunststoffliner mit Fixierungselementen versehen ist.

Druckbehälter finden in vielen Bereichen Anwendung. So existieren z.B. Druckbehälter zur Speicherung und zum Transport von Gasen wie z.B. Luft, Stickstoff, Wasserstoff oder auch Sauerstoff. In Kraftfahrzeugen, bevorzugt Automobilen, werden bereits heute eine Vielzahl von Druckbehältern verbaut, um diese mit komprimiertem Erdgas (CNG, compressed natural gas) oder Autogas (LPG, liquefied petroleum gas) zu betreiben. Die meisten heute verwendeten Druckbehälter basieren auf Metallen, wie z.B. Stahlbehältern. Nachteilig an metallischen Druckbehältern ist deren materialbedingtes hohes Gewicht sowie deren Unbeständigkeit gegenüber Korrosion und deren teilweise hohe Fertigungskosten. Druckbehälter als Vollcomposit (innenliegender Kunststoffliner der mit einer äußeren Verstärkungsschicht versehen ist) bieten hier Vorteile zur Gewichtseinsparung, Korrosionsbeständigkeit und Reduzierung der Fertigungskosten.

Bei der Verwendung eines Vollcomposit Druckbehälters kommt es durch die unterschiedlichen Wärmedehnungen der äußeren Hülle (Verstärkungsschicht, z.B. Faserwickelung) und des innenliegenden, umwickelten Kunststoffliners, während eines Abkühlvorganges zu einer größeren thermischen Kontraktion und somit Ablösung des Liners. Bei Druckbeaufschlagung (z.B. beim Füllen des Behälters) dehnt sich der Kunststoffliner zunächst bevorzugt im zylindrischen Bereich und es kommt durch die Anlage des Kunststoffliners an die äußere Hülle infolge von Wandhaftung und Wandreibung, die überwiegend im zylindrischen Bereich zuerst stattfindet, zu einer überproportionalen Belastung in den Endbereichen des Liners (Endkappen).

Da Hohlkörper wie z.B. der innenliegende Kunststoffliner vorzugsweise im Blasformverfahren hergestellt werden, stellt die prozessbedingte, ungleichmäßige Wanddickenverteilung im Endbereich des Liners (Endkappen) vor allem im Bereich der Quetschnaht eine weitere Schwachstelle des Systems dar, die ebenfalls zu Spannungsspitzen unter Last führt.

Bekannte Schutzrechte, die mit der Anwendung Druckbehälter in Verbindung stehen, beziehen sich hauptsächlich auf die Materialzusammensetzung zur Herstellung des Kunststoffliners.

In US 8,053,523 B2 wird eine Materialzusammensetzung für die Verwendung als Liner in einem Wasserstofftank beschrieben.

EP 1 333 060 A1 beschreibt die Verwendung von Formmassen für Hohlkörper z.B. im Extrusionsverfahren.

EP-A 0 810 081 offenbart zweischalige Druckgefäße bestehend aus einer Innenhülle als Gassperre (beispielsweise aus Kunststoff) und einer druckfesten Außenhülle aus faserverstärktem Kunststoff zur Aufbewahrung von komprimiertem Erdgas. Ein solcher Behälter kann gefertigt werden, indem in einem ersten Schritt die Innenhülle aus Kunststoff mittels Extrusionsblasformen hergestellt wird, und in einem zweiten Schritt die Außenhülle aus faserverstärktem Kunststoff aufgebracht wird, beispielsweise durch Aufwickeln harzgetränkter Verstärkungsfasern.

Aus EP-A 1 260 755 ist ein Tank und Tanksattelauflieger zur Aufnahme verflüssigter Gase bekannt, dessen Innenbehälter aus rostfreiem Stahl und dessen Außenbehälter aus einer Aluminiumlegierung besteht. Derartige Tanks können auch als Eisenbahncontainer oder Wechselbehälter ausgestaltet sein.

EP-A 1 538 110 beschreibt einen Behälter zur Lagerung flüssiger Mineralöl-Produkte. Zwar sollen derartige Tanks die DIN 4119 erfüllen, dem Design des innenliegenden Liners kommt hierbei jedoch keine Bedeutung zu.

WO 2007/074 098 A1 beschreibt u.a. einen Gastank zum Betanken mit gasförmigem Brennstoff, insbesondere Erdgas ($CH_4$) oder Wasserstoff, dessen Innenraum als Speichermaterial Metal Organic Frame work (MOF) zum Aufnehmen des Brennstoffs enthält. Jene MOFs zeichnen sich durch eine extrem hohe spezifische Oberfläche in Form von Nanostrukturen aus, weshalb sie aus metallischen und organischen Molekülen bestehen, die zusammen ein sehr einheitliches Kristallgitter bilden. Die Konstruktion des Liners wird nicht weiter beachtet.

Nachteilig an den im Stand der Technik beschriebenen metallischen Druckbehältern ist deren materialbedingtes hohes Gewicht sowie deren Unbeständigkeit gegenüber Korrosion und deren teilweise hohe Fertigungskosten. Druckbehälter als Vollcomposit - innenliegender Kunststoffliner der mit einer äußeren Verstärkungsschicht versehen ist - werden im Stand der Technik hauptsächlich hinsichtlich der zu verwendenden Materialien beschrieben. Konstruktive Lösungen zur Spannungsoptimierung finden sich nicht.

Aufgabe der vorliegenden Erfindung war es deshalb eine konstruktive Maßnahme zu entwickeln, die zu einer gleichmäßigeren der Belastung des innenliegenden Liners führt und somit auftretende Spannungen reduziert.

Lösung der Aufgabe und somit Gegenstand der vorliegenden Erfindung sind zylindrische Druckbehälter, dadurch gekennzeichnet, dass diese einen innenliegenden Kunststoffliner aufweisen, der mit einer äußeren Verstärkungsschicht, bevorzugt aus einem faserverstärkten Material, besonders bevorzugt aus Kohle- und/oder Glasfasern, oder Metall, bevorzugt als flächiges Blech oder als Metallgerüst als Außenhülle versehen ist, wobei der innenliegende Kunststoffliner im Übergangsbereich zwischen dem zylindrischen Behälterbereich und den Endbereichen bzw. Kappen Fixierungselemente aufweist.

Die Fixierungselemente dienen dazu, die Längenausdehnungsdifferenz zwischen Liner und äußerer Verstärkungsschicht, insbesondere einer Faserwicklung im axialen Bereich, zu reduzieren und um die freie Kontraktion während des Abkühlvorganges zu verringern.

Grundsätzlich sind weitere Außenhüllen-Materialien denkbar.

Als Fixierungselement werden bevorzugt Fixierungspunkte, umlaufende Stege o.ä. verwendet.

Die Fixierungselemente werden vorzugsweise als am Umfang umlaufende Rippen oder segmentierte Rippen ausgeführt. Dafür kommen verschiedene Ausführungsformen in Frage, die durch ihre Form einen Formschluss mit der äußeren Verstärkungsschicht aufweisen können um die Ablösung des Inliners von der äußeren Verstärkungsschicht bei Abkühlung zu verhindern. Dies ist in Fig. 1 und 2 dargestellt. Die Anzahl der Fixierungselemente liegt vorzugsweise bei mindestens zwei, das heißt wenigstens ein Fixierungselement an jedem Übergang des zylindrischen Teils zu einer Endkappe. Je nach Länge des zylindrischen Teils des Druckbehälters können in bevorzugten Ausführungsformen auch mehr als zwei Fixierungselemente erforderlich sein. Die Ausführungsform der Rippen ist in vielen verschiedenen Variationen denkbar, wobei erfindungsgemäß die in Fig. 1 als Schnitt AA dargestellten Varianten bevorzugt sind. R in Fig. 1 steht für dort dargestellte zwei Fixierungselemente in Form "umlaufender Rippen" und R' in Fig. 2 steht für zwei dargestellte Fixierungselemente in Form "segmentierter umlaufender Rippen".

Die vorliegende Erfindung betrifft ferner ein Verfahren zur Herstellung eines zylindrischen Druckbehälters dadurch gekennzeichnet, dass ein innenliegender Kunststoffliner, der im Übergangsbereich zwischen dem zylindrischen Behälterbereich und den Endbereichen bzw. Kappen Fixierungselemente aufweist, in einem Stück über gängige Kunststoffverarbeitungsverfahren durch geeignete Blechwerkzeuggestaltung hergestellt wird und auf die äußere Verstärkungsschicht aufgebracht wird oder durch Zusammenfügen des Liners aus dem zylindrischen Bereich und zwei Endbereichen bzw. Endkappen.

Die Erfindung betrifft deshalb auch zylindrischer Druckbehälter dadurch gekennzeichnet, dass der innenliegende Kunststoffliner segmentiert ist und die Endbereiche bzw. Endkappen mit dem zylindrischen Bereich via Schweiß- oder Klebetechnik verbunden sind.

Auf diese Weise wird die Längenausdehnungsdifferenz zwischen Liner und äußerer Faserwicklung im axialen Bereich reduziert und die freie Kontraktion während des Abkühlvorganges verringert.

Bevorzugte Kunststoffverarbeitungsverfahren im Sinne der vorliegenden Erfindung sind Extrusionsverfahren oder Spritzgussverfahren, besonders bevorzugt das Extrusionsblasformen. Diese Verfahren werden dann durch geeignete Verbindungsmethoden, bevorzugt Schweißverfahren oder Klebverfahren ergänzt

In einer bevorzugten Ausführungsform werden die Endkappen im Spritzgussverfahren hergestellt und die Ausbildung der Fixierungselemente durch konstruktive Aussparungen in der Spritzgussform ermöglicht. Besonders bevorzugt werden die gespritzten Endkappen in ihrer Wanddicke und ihrem Design gezielt dem vorliegenden Spannungszustand angepasst und somit die Spannungen vergleichmäßigt und reduziert.

In einer erfindungsgemäß alternativen Ausführungsform wird eine Zwei-Schalentechnik angewandt, bei der der obere und untere Teil des Liners verbunden werden und somit die Schweißnaht in einem günstigen Spannungsbereich liegt.

Bei der anschließenden Komplettierung des innenliegenden Kunststoffliners mit der äußeren Verstärkungsschicht werden die Fixierungselemente des Kunststoffliners in diese äußere Schicht mit eingearbeitet, bevorzugt beim Wickelprozess mit Kohle- und/oder Glasfasern. Dadurch wird die freie Kontraktion, insbesondere bei Abkühlvorgängen, vor allem im zylindrischen Bereich, bevorzugt in axialer Richtung behindert und somit die Gesamtkontraktion reduziert. Dies führt zu einer geringeren, gleichmäßigeren Spannungsbeanspruchung bei Druckbeaufschlagung.

Als Kunststoffe für den innenliegenden Liner wird wenigstens ein Thermoplast, bevorzugt wenigstens ein Thermoplast der Reihe Polyolefine, Polyamide, Polyimide, Polyether, Polyester, Polyphenylensulfid (PPS), Polycarbonate und/oder Polyalkylene oder eine Kombination verschiedener Thermoplaste eingesetzt. Besonders bevorzugt werden Polyamide oder Polypropylen eingesetzt.

Die wie beschrieben herzustellenden Inliner werden zur Herstellung von Druckbehältern eingesetzt. Erfindungsgemäß werden diese Druckbehälter zur Speicherung von Gas, insbesondere zur Speicherung von Gas für Gas-betriebene oder Gas-transportierende Fahrzeuge, bevorzugt Kraftfahrzeugen, Tankwagen, Kesselwagen, Eisenbahncontainern oder Wechselcontainern eingesetzt. Besonders bevorzugt erfolgt der Einsatz bei Kraftfahrzeugen Personenkraftwagen, Motorrädern, Lastkraftwagen, Kraftomnibussen, Zugmaschinen, Traktoren.

Die Größe der Druckbehälter liegt vorzugsweise im Bereich von 1 - 500 Litern Volumen . Die Durchmesser liegen vorzugsweise im Bereich von 50 mm - 500 mm und die Länge ist je nach Anwendungsfall variabel, vorzugsweise zwischen 100 mm und 3000 mm. Besonders bevorzugte Größen sind in Bereich Durchmesser 100 mm - 400mm und Längen von 400 mm bis 2500 mm.

Für die erfindungsgemäß herzustellenden Kunststoffinliner bzw. die daraus herzustellenden Druckbehälter einzusetzende Formmassen sind von der Zusammensetzung im Prinzip aus WO 2001/066 643 A1 bekannt, mit dem Unterschied, dass dort verstärkte Formmassen beschrieben werden. Unverstärkt im Sinne der vorliegenden Erfindung

bedeutet daher frei von Füll- und Verstärkungsstoffen, insbesondere frei von faserförmigen Verstärkerstoffen und/oder mineralischen Füllstoffen wie sie in der WO 2001/066 643 A1 eingesetzt werden, so dass der Gehalt an Füll- oder Verstärkungsstoffen, insbesondere Glasfasern, in den erfindungsgemäß einzusetzenden Formmassen also 0 Gew.-Teile beträgt.

Zur Herstellung der in den erfindungsgemäßen Druckbehältern bzw. deren Kunststoffinlinern einzusetzenden Polyamide sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der in den Formmassen einzusetzenden Polyamide verlaufen bevorzugt über die Polykondensation in der Schmelze. Erfindungsgemäß wird hierunter auch die hydrolytische Polymerisation von Lactamen als Polykondensation verstanden.

Aus der oben genannten Reihe der Thermoplasten werden als bevorzugt einzusetzende Polyamide teilkristalline oder amorphe Polyamide, die ausgehend von Diaminen und Dicarbonsäuren und/oder Lactamen mit wenigstens 5 Ringgliedern oder entsprechenden Aminosäuren hergestellt werden können, eingesetzt. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Pentamethylendiamin, Hexamethylendiamin, 1,9-Nonandiamin, 2,2,4- und 2,4,4-Trimethylhexamethylendiamin, die Isomeren Diaminodicyclohexylmethane, Diaminodicyclohexylpropane, Bis-aminomethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt sind Polyamid 6, Polyamid 66 und Caprolactam als Comonomer enthaltende Copolyamide einzusetzen.

Es können außerdem Anteile von rezyklierten Polyamid-Formmassen enthalten sein.

Die für die einzusetzenden Formmassen als Basisharz einzusetzenden Polyamide weisen vorzugsweise eine relative Viskosität $\eta$ rel (gemessen an einer 1 gew.-%igen Lösung in meta-Kresol bei 25°C) von 2,3 bis 4,0 besonders bevorzugt von 2,7 bis 3,5 auf.

In einer bevorzugten Ausführungsform werden zur Herstellung der Inliner für die erfindungsgemäßen Druckbehälter Formmassen enthaltend

A) 50 bis 99,97 Gew.-Teile eines oder mehrerer Polyamide oder Copolyamide,

B) 0,01 bis 40 Gew.-Teile Schlagzähmodifikatoren,

C) 0,01 bis 10 Gew.-Teile di- oder mehrfunktionelle verzweigend oder kettenverlängernd wirkende Additive und

D) 0,01 bis 10 Gew.-Teile Copolymerisate aus mindestens einem Olefin und mindestens einem Acrylsäureester eines aliphatischen Alkohols wobei
und die Summe der Gewichtsteile 100 ergibt, eingesetzt.

Der Einsatz dieser in einer bevorzugten Ausführungsform hier aufgeführten Formmassen auf Basis von Polyamid sind aus DE 202010017414 U bekannt. Schlagzähmodifikatoren werden oft auch als Elastomermodifikatoren, Elastomer, Modifikator oder Kautschuk bezeichnet.

Bevorzugt handelt es sich dabei um Copolymerisate wobei Copolyamide ausgenommen sind, die bevorzugt aus mindestens zwei Monomeren der Reihe Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente aufgebaut sind.

Derartige Polymere werden z. B. in Houben-Weyl, "Methoden der organischen Chemie", Bd. 14/1 (Georg-Thieme-Verlag, Stuttgart, 1961), Seiten 392 bis 406 und in der Monographie von C. B. Bucknall, "Toughened Plastics" (Applied Science Publishers, London, 1977) beschrieben.

Die Komponente B) wird zu 0,01 bis 40 Gew.-Teilen, bevorzugt zu 10 bis 35 Gew.-Teilen, besonders bevorzugt 20 bis 30 Gew.-Teilen bezogen auf 100 Gew.-Teile Formmasse eingesetzt. Im Folgenden werden einige gemäß der vorliegenden Erfindung, bevorzugt als Komponente B) einzusetzende Schlagzähmodifikatoren vorgestellt.

Bevorzugte Arten solcher als Schlagzähmodifikatoren einzusetzenden Elastomeren sind die sogenannten Ethylen-Propylen-Kautschuke (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen pro 100 C-Atome aufweisen können.

Als Dien-Monomere für EPDM-Kautschuke werden bevorzugt konjugierte Diene wie Isopren oder Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadien, Cyclooctadien und Dicyclopentadien sowie Alkenylnorbomene wie 5-Ethyliden-2-norbomen, 5-Butyli-den-2-norbornen, 2-Methallyl-5-norbornen, 2-Isopropenyl-5-norbomen und Tricyclodiene wie 3-Methyl-tricyclo-(5.2.1.0.2.6)-3,8-decadien oder deren Mischungen eingesetzt. Besonders bevorzugt werden Hexa-1,5-dien, 5-Ethylidennorbornen oder Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM-bzw. EPDM-Kautschuke können vorzugsweise auch mit reaktiven Carbonsäuren oder deren Derivaten gepfropft sein. Hier seien bevorzugt Acrylsäure, Methacrylsäure und deren Derivate, insbesondere Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren, bevorzugt Maleinsäure und Fumarsäure oder Derivate dieser Säuren, bevorzugt Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln (I) oder (II) oder (III) oder (IV) zum Monomerengemisch in den Kautschuk eingebaut,

$$R^1C(COOR^2)=C(COOR^3)R^4 \quad (I)$$

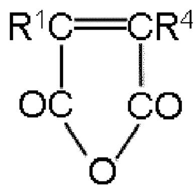

(II)

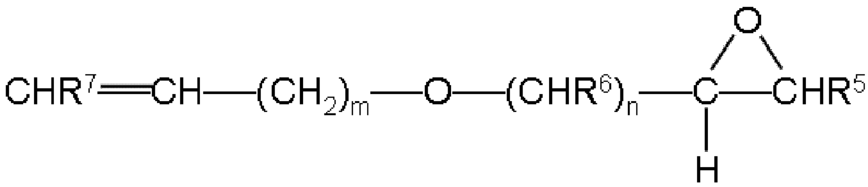

(III)

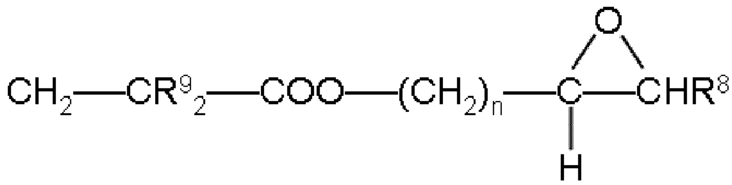

(IV)

wobei

| | |
|---|---|
| $R^1$ bis $R^9$ | Wasserstoff oder Alkylgruppen mit 1 bis 6 C-Atomen darstellen, |
| m | eine ganze Zahl von 0 bis 20, und |
| n | eine ganze Zahl von 0 bis 10 ist. |

Vorzugsweise bedeuten die Reste $R^1$ bis $R^9$ Wasserstoff, wobei m für 0 oder 1 und n für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln (I), (II) und (IV) sind Maleinsäure, Maleinsäureanhydrid und Epoxygruppen-enthaltende Ester der Acrylsäure und/oder Methacrylsäure, bevorzugt Glycidylacrylat, Glycidylmethacrylat und die Ester mit tertiären Alkoholen, bevorzugt t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Bevorzugt bestehen die Copolymere aus 50 bis 98 Gew.-Teilen Ethylen, 0,1 bis 20 Gew.-Teilen Epoxygruppen enthaltenden Monomeren und/oder Methacrylsäure und/oder Säureanhydridgruppen enthaltenden Monomeren sowie der restlichen Menge an (Meth-)Acrylsäureestern. Der Ausdruck (Meth)Acrylsäureester steht erfindungsgemäß sowohl für Ester der Acrylsäure als auch für Ester der Methacrylsäure.

Besonders bevorzugt sind Copolymerisate aus

50 bis 98, insbesondere 55 bis 95 Gew.-Teilen Ethylen,

0,1 bis 40, insbesondere 0,3 bis 20 Gew.-Teilen Glycidylacrylat und/oder Glycidylmethacrylat, (Meth-)acrylsäure und/oder Maleinsäureanhydrid, und

1 bis 45, insbesondere 10 bis 40 Gew.-Teilen n-Butylacrylat und/oder 2-Ethylhexylacrylat.

Weitere bevorzugte Ester der Acryl- und/oder Methacrylsäure sind die Methyl-, Ethyl-, Propyl-und i-bzw. t-Butylester.

Daneben können auch Vinylester und Vinylether als Comonomere eingesetzt werden.

Die vorstehend beschriebenen Ethylencopolymere können nach bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z. B. bei Blackley in der Monographie "Emulsion Polymerisation" beschrieben wird. Die verwendbaren Emulgatoren und Katalysatoren sind bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate, bevorzugt n-Butylacrylat und 2-Ethylhexylacrylat, entsprechende Methacrylate, Butadien und Isopren sowie deren Mischungen genannt. Diese Monomeren können mit weiteren Monomeren, bevorzugt Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, $\alpha$-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind bevorzugt Epoxy-, Carboxyl-, latente Carboxyl-, Amino- oder Amidgruppen sowie funktionelle Gruppen, die durch Mitverwendung von Monomeren der allgemeinen Formel (V)

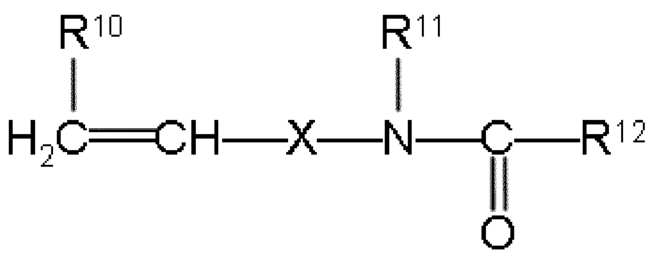

(V)

eingeführt werden können, worin die Substituenten folgende Bedeutung haben können:

$R^{10}$ Wasserstoff oder eine $C_1$-bis $C_4$-Alkylgruppe,

$R^{11}$ Wasserstoff, eine $C_1$-bis $C_8$-Alkylgruppe oder eine Arylgruppe, insbesondere Phenyl,

$R^{12}$ Wasserstoff, eine $C_1$- bis $C_{10}$-Alkylgruppe, eine $C_6$-bis $C_{12}$-Arylgruppe oder $-OR^{13}$

$R^{13}$ eine $C_1$-bis $C_8$-Alkylgruppe oder $C_6$-bis $C_{12}$-Arylgruppe, die gegebenenfalls mit O-oder N-haltigen Gruppen substituiert sein können,

X eine chemische Bindung, eine $C_1$-bis $C_{10}$-Alkylengruppe, eine $C_6$-bis $C_{12}$-Arylengruppe oder

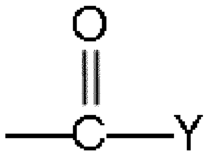

Y für eine Gruppe O-Z oder NH-Z steht und

Z für eine $C_1$-bis $C_{10}$-Alkylengruppe oder eine $C_6$-bis $C_{12}$-Arylengruppe steht.

Auch die in der EP 0 208 187 A2 beschriebenen Pfropfinonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)-ethylacrylat, (N, N-Dimethylamino)-methylacrylat und (N, N-Diethylamino)-ethylacrylat genannt.

Weiterhin können die Teilchen der Kautschukphase auch vernetzt sein. Als Vernetzer wirkende Monomere sind bevorzugt Buta-1,3-dien, Divinylbenzol, Diallylphthalat und Dihydrodicyclopentadienylacrylat sowie die in der EP 0 050 265 A1 beschriebenen Verbindungen einzusetzen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktiven Gruppen) z. B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Bevorzugte pfropfvemetzende Monomere sind Allylgruppen enthaltende Monomere, besonders bevorzugt Allylester von ethylenisch ungesättigten Carbonsäuren, insbesondere bevorzugt Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvemetzender Monomerer; für nähere Einzelheiten sei hier beispielsweise auf die US-A 4148846 und US-A 4 327 201 verwiesen.

Nachfolgend seien einige erfindungsgemäß bevorzugte Emulsionspolymerisate aufgeführt. Zunächst sind hier Pfropfpolymerisate mit einem Kem und mindestens einer äußeren Schale zu nennen, die folgenden Aufbau haben:

**Tabelle 1**

| Typ | Monomere für den Kern | Monomere für die Hülle |
|---|---|---|
| I | Buta-1,3-dien, Isopren, Styrol, Acrylnitril, Methylmethacrylat n-Butylacrylat, Ethylhexylacrylat oder deren Mischungen | Styrol, Acrylnitril, Methylmethacrylat |
| II | wie I, aber unter Mitverwendung von wie 1 Vernetzern | |
| III | wie I oder II | n-Butylacrylat, Ethylacrylat, Methylcrylat, Buta-1, 3-dien, Isopren, Ethylhexylacrylat |
| IV | wie I oder II | wie I oder III, aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d. h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, bevorzugt durch Suspensionspolymerisation, hergestellt werden. Siliconkautschuke, wie in der DE 3 725 576 A1, der EP 0 235 690 A2, der DE 3 800 603 A1 und der EP 0 319 290 A1 beschrieben, sind ebenfalls bevorzugt.

Selbstverständlich können auch Mischungen der vorstehend aufgeführten Kautschuktypen eingesetzt werden.

Erfindungsgemäß insbesondere bevorzugt werden als Komponente B) Schlagzähmodifikatoren des EPM-, EPDM-und Acrylat-Typs eingesetzt.

Als Komponente C) enthält die einzusetzende thermoplastische Formmasse di- oder mehrfunktionell verzweigend oder kettenverlängernd wirkende Additive enthaltend mindestens zwei und höchstens 15 verzweigend oder kettenverlängernd wirkende funktionelle Gruppen pro Molekül. Als verzweigend bzw. kettenverlängende Additive kommen niedermolekulare und oligomere Verbindungen in Frage, die über mindestens zwei und höchstens 15 verzweigend oder kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, blockierte Isocyanate, Epoxide, Maleinsäureanhydrid, Oxazoline, Oxazine, Oxazolone.

Insbesondere bevorzugt sind Diepoxide auf Basis Diglycidylether (Bisphenol und Epichlorhydrin), auf Basis Aminepoxidharz (Anilin und Epichlorhydrin), auf Basis Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei und höchstens 15 Epoxidgruppen pro Molekül.

Besonders bevorzugt sind Glycidylether, ganz besonders bevorzugt Bisphenol A-Diglycidylether und epoxidierte Fettsäureester des Glycerins, sowie auch ganz besonders bevorzugt epoxidiertes Sojaöl (CAS 8013-07-8).

Epoxidiertes Sojaöl ist als Co-Stabilisator und Weichmacher für Polyvinylchlorid bekannt (Plastics Additives Handbook, 5th Edition, Hanser-Verlag, München, 2001, S.460-462). Es wird insbesondere in Polyvinylchlorid-Dichtungen von Metalldeckeln zum luftdichten Verschließen von Gläsern und Flaschen verwendet.

Zur Verzweigung/Kettenverlängerung sind besonders bevorzugt geeignet:

1. Poly- bzw. Oligoglycidyl- oder Poly-(ß-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschließender Alkalibehandlung.
Poly- bzw. Oligoglycidyl- oder Poly-(ß-methylglycidyl)-ether leiten sich bevorzugt ab von acyclischen Alkoholen, wie Ethylenglykol, Diethylenglykol und höhereren Poly-(oxyethylen)-glykolen, Propan-1,2-diol, Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit sowie von Polyepichlorhydrinen.
Sie leiten sich aber auch bevorzugt ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyelhyl)anilin oder p,p'-Bis-(2-hydroxyethyl-amino)-diphenylmethan.
Die Epoxidverbindungen können sich bevorzugt auch von einkemigen Phenolen ableiten, insbesondere von Resorcin oder Hydrochinon; oder sie basieren auf mehrkernigen Phenolen insbesondere auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dlhydroxydiphenylsulfon oder auf unter sauren Bedingungen erhaltene Kondensationsprodukte von Phenolen mit Formaldehyd wie Phenol-Novolake.

2. Poly- bzw. Oligo-(N-glycidyl)-Verbindungen ferner erhältlich durch Dehydrochlorierung der Reaktionsprodukte von Epichlorhydrin mit Aminen, die mindestens zwei Aminowasserstoffatome enthalten. Bei diesen Aminen handelt es sich bevorzugt um Anilin, Toluidin, n-Butylamin, Bis-(4-aminophenyl)methan, m-Xylylendiamin oder Bis-(4-methylaminophenyl)-methan, aber auch N,N,O-Triglycidyl-m-aminophenyl oder N,N,O-Triglycidyl-p-aminophenol.
Zu den Poly-(N-glycidyl)-Verbindungen zählen aber auch bevorzugt N,N'-Diglycidylderivate von Cycloalkylenhamstoffen, besonders bevorzugt Ethylenharnstoff oder 1,3-Propylenhamstoff, und N,N'-Diglycidylderivate von Hydantoinen, insbesondere 5,5-Dimethylhydantoin.

3. Poly- bzw. Oligo-(S-glycidyl)-Verbindungen insbesondere Di-S-glyci-dylderivate, die sich von Dithiolen, bevorzugt Ethan-1,2-dithiol oder Bis-(4-mercaptomethylphenyl)-ether ableiten.

4. Epoxidierte Fettsäureester des Glycerins, insbesondere epoxidierte Pflanzenöle. Sie werden durch Epoxidierung der reaktionsfähigen Olefingruppen von Triglyceriden ungesättigter Fettsäuren erhalten. Die Herstellung epoxidierter Fettsäureester des Glycerins kann ausgehend von ungesättigten Fettsäureestern des Glycerins, bevorzugt von Pflanzenölen, und organischen Peroxycarbonsäuren (Prileschajew-Reaktion) erfolgen. Verfahren zur Herstellung von epoxidierten Pflanzenölen sind zum Beispiel in Smith, March, March's Advanced Organic Chemistry (5. Auflage, Wiley-Interscience, New York, 2001) beschrieben. Bevorzugte epoxidierte Fettsäureester des Glycerins sind Pflanzenöle. Erfindungsgemäß besonders bevorzugter epoxidierter Fettsäureester des Glycerins ist epoxidiertes Sojaöl (CAS 8013-07-8).

Die Komponente C) wird zu 0,01 bis 10 Gew.-Teilen, bevorzugt zu 0,1 bis 5 Gew.-Teilen, besonders bevorzugt zu 0,2 bis 4 Gew.-Teilen, ganz besonders bevorzugt zu 0,4 bis 3 Gew.-Teilen bezogen auf 100 Gew.-Teile Formmasse eingesetzt,

Die einzusetzende thermoplastische Formmasse enthält zusätzlich zu den Kompoenten A), B) und C) noch Copolymerisate D) aus mindestens einem Olefin, bevorzugt $\alpha$-Olefin und mindestens einem Methacrylsäureester oder Acrylsäureester eines aliphatischen Alkohols, wobei der MFI des Copolymerisats D) größer 10 g / 10 min ist, bevorzugt größer 150 g / 10 min und besonders bevorzugt größer 300 g / 10 min ist, enthalten. In einer bevorzugten Ausführungsform besteht das Copolymerisat D) zu weniger als 4 Gew.-Teilen, besonders bevorzugt zu weniger als 1,5 Gew.-Teilen und ganz besonders bevorzugt zu 0 Gew.-Teilen aus Monomerbausteinen, die weitere reaktive funktionelle Gruppen ausgewählt aus der Gruppe umfassend Epoxide, Oxetane, Anhydride, Imide, Aziridine, Furane, Säuren, Amine, Oxazoline enthalten.

Geeignete Olefine, bevorzugt $\alpha$-Olefine, als Bestandteil der Copolymerisate D) weisen bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiter bevorzugten Ausführungsform werden die weiteren reaktiven funktionellen Gruppen des Copolymerisates D), ausgewählt aus der Gruppe umfassend Epoxide, Oxetane, Anhydride, Imide, Aziridine, Furane, Säuren, Amine, Oxazoline, ausschließlich über die Olefine in das Copolymer D) eingebracht.

Der Gehalt des Olefins am Copolymerisat D) liegt zwischen 50 und 90 Gew.-Teilen, bevorzugt zwischen 55 und 75 Gew.-Teilen.

Das Copolymerisat D) wird weiterhin definiert durch den zweiten Bestandteil neben dem Olefin. Als zweiter Bestandteil werden Alkylester oder Arylalkylester der Acrylsäure eingesetzt, deren Alkyl- oder Arylalkylgruppe aus 1-30 Kohlenstoffatomen gebildet wird. Die Alkyl- oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein. Geeignete Acrylsäureester in diesem Zusammenhang sind auch solche, die aus einer Alkoholkomponente synthetisiert wurden, die auf Oligoethylenglycol oder Oligopropylenglycol mit nur einer Hydroxylgruppe und maximal 30 C-Atomen basieren.

Bevorzugt kann die Alkylgruppe oder Arylalkylgruppe des Acrylsäureesters ausgewählt sein aus der Gruppe umfassend Methyl, Ethyl, n-Propyl, iso-Propyl, n-Butyl, iso-Butyl, tert-Butyl, sec-Butyl, 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkylgruppen oder Arylalkylgruppen mit 6-20 Kohlenstoffatomen. Bevorzugt sind insbesondere auch verzweigte Alkylgruppen, die im Vergleich zu linearen Alkylgruppen gleicher Anzahl an Kohlenstoffatomen zu einer niedrigeren Glasübergangs-Temperatur $T_G$ führen.

Besonders bevorzugt sind Copolymerisate D), bei denen das Olefin mit Acrylsäure-(2-ethyl)-hexylester copolymerisiert wird. Ebenfalls geeignet sind Mischungen der beschriebenen Acrylsäureester.

Bevorzugt ist hierbei die Verwendung von mehr als 60 Gew.-Teilen, besonders bevorzugt mehr als 90 Gew.-Teilen und ganz besonders bevorzugt die Verwendung von 100 Gew.-Teilen Acrylsäure-(2-ethyl)-hexylester bezogen auf die Gesamtmenge an Acrylsäureester im Copolymerisat D).

In einer weiteren bevorzugten Ausführungsform werden die weiteren reaktiven funktionellen Gruppen ausgewählt aus der Gruppe umfassend Epoxide, Oxetane, Anhydride, Imide, Aziridine, Furane, Säuren, Amine, Oxazoline des Copolymerisates D) ausschließlich über die Acrylsäureester in das Copolymer (D) eingebracht.

Der Gehalt der Acrylsäureester am Copolymerisat D) liegt zwischen 10 und 50 Gew.-Teilen, bevorzugt zwischen 25 und 45 Gew.-Teilen.

Die Komponente D) wird zu 0,01 bis 10 Gew.-Teilen, bevorzugt zu 1 bis 8 Gew.-Teilen, besonders bevorzugt zu 2 bis 6 Gew.-Teilen bezogen auf 100 Gew.-Teile Formmasse eingesetzt

In einer bevorzugten Ausführungsform können die einzusetzenden thermoplastischen Formmassen zusätzlich noch E) Ruß und/oder Nigrosin enthalten. Der Gehalt Ruß und/oder Nigrosin beträgt 0,01 bis 5 Gew.-Teile, bevorzugt 0,1 bis 4 Gew.-Teile bezogen auf 100 Gew. Teile Formmasse.

In einer alternativen Ausführungsform oder in einer bevorzugten Ausführungsform können die einzusetzenden thermoplastischen Formmassen anstelle von E) und/oder zusätzlich zu E) von den vorgenannten Komponenten sich unterscheidende Additive F) enthalten.

Bevorzugte Additive F) im Sinne der vorliegenden Erfindung sind Stabilisatoren, Antistatika, Brandschutzadditive, Entformungsmittel, Nukleierungsmittel, Gleitmittel, oder Additive zur Erhöhung der elektrischen Leitfähigkeiten. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive F) können alleine oder in Mischung bzw. in Form von Masterbatchen eingesetzt werden.

Erfindungsgemäß einzusetzende, sich von den vorgenannten Komponenten B) bis E) unterscheidende Additive F) werden zu 0,01 bis 5 Gew.-Teilen, bevorzugt zu 0,1 bis 4 Gew.-Teilen bezogen auf 100 Gew. Teile Formmasse eingesetzt.

Besonders bevorzugte Stabilisatoren sind Thermostabilisatoren und UV-Stabilisatoren. Als Stabilisatoren werden bevorzugt Kupferhalogenide, bevorzugt Chloride, Bromide, Jodide in Verbindung mit Halogeniden von Alkalimetallen, bevorzugt Natrium-, Kalium und/oder Lithiumhalogenide, und/oder in Verbindung mit hypophosphoriger Säure oder eines Alkali-oder Erdalkalisalzes dieser Säure, sowie sterisch gehinderte Phenole, Hydrochinone, Phosphite, aromatische sekundäre Amine wie Diphenylamine, substituierte Resorcine, Salicylate, Benzotriazole oder Benzophenone, sowie verschieden substituierte Vertreter dieser Gruppen oder deren Mischungen eingesetzt.

Ganz besonders bevorzugte Stabilisatoren sind Gemische aus einem Kupferjodid, einer oder mehreren Halogenverbindungen, vorzugsweise Natrium-oder Kaliumjodid, und hypophosphoriger Säure oder eines Alkali- oder Erdalkalisalzes dieser Säure, wobei die einzelnen Komponenten des Stabilisatorgemisches in einer solchen Menge zugesetzt werden, dass die in der Formmasse enthaltene molare Menge an Halogen größer oder gleich der sechsfachen molaren Menge und kleiner oder gleich der fünfzehnfachen, vorzugsweise zwölffachen, molaren Mengen des in der Formmasse enthaltenen Kupfers und die molare Menge an Phosphor größer oder gleich der molaren Menge und kleiner oder gleich der zehnfachen, vorzugsweise fünffachen molaren Menge des in der Formmasse enthaltenen Kupfers beträgt.

Als Nukleierungsmittel können bevorzugt Natrium- oder Calciumphenylphosphinat, Aluminiumoxid, Siliziumdioxid sowie bevorzugt Talkum eingesetzt werden.

Als Gleit- und Entformungsmittel können bevorzugt Esterwachse, Pentaerytritoltetrastearat (PETS), langkettige Fettsäuren, bevorzugt Stearinsäure oder Behensäure und Ester, deren Salze, bevorzugt Ca- oder Zn-Stearat, sowie Amidderivate, bevorzugt Ethylen-bis-stearylamid oder Montanwachse, bevorzugt Mischungen aus geradkettigen, gesättigten Carbonsäuren mit Kettenlängen von 28 bis 32 C-Atomen sowie niedermolekulare Polyethylen- bzw. Polypropylenwachse eingesetzt werden.

Als Additive zur Erhöhung der elektrischen Leitfähigkeit können bevorzugt Ruße, Leitfähigkeitsruße, Graphit sowie andere übliche, nicht faserige Additive zur Erhöhung der elektrischen Leitfähigkeit zugesetzt werden.

Die Gastanks werden durch Extrusions- oder Blasformverfahren aus den einzusetzenden, unverstärkten thermoplastischen Formmassen hergestellt oder innen ausgekleidet.

Zu nutzende Verfahren zur Herstellung von Gastanks, bevorzugt von Gastank-Innenhüllen, durch Blasformen oder Spritzguss arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Das Verfahren des Spritzgusses zeichnet sich dadurch aus, dass der in der vorliegenden Erfindung als unverstärkte thermoplastische Formmasse einzusetzende Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

Man unterscheidet

1. Plastifizieren / Aufschmelzen
2. Einspritzphase (Füllvorgang)
3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Blasformverfahren im Sinne der vorliegenden Erfindung sind bevorzugt Standard-Extrusionsblasformen, 3D-Extrusionsblasformen, Saugblasformverfahren und die sequentielle Coextrusion. Blasformverfahren finden bei Scherraten < 1000 $s^{-1}$ statt.

Die grundsätzlichen Verfahrensschritte des Standard-Extrusionsblasformens sind gemäß (Thielen, Hartwig, Gust, "Blasformen von Kunststoffhohlkörpern", Carl Hanser Verlag, München 2006, Seiten 15 bis 17):

1. Plastifizieren und Bereitstellen der thermoplastischen Schmelze in einem Extruder,

2. Umlenken der Schmelze in eine senkrechte Fließbewegung nach unten und das Ausformen eines schlauchförmigen Schmelze-"Vorformlings",

3. Umschließen des frei unter dem Kopf hängenden Vorformlings durch eine in der Regel aus zwei Halbschalen bestehenden Form, dem Blasformwerkzeug,

4. Einschieben eines Blasdoms oder einer (ggf. mehrer) Blasnadel(n),

5. Aufblasen des plastischen Vorformlings gegen die gekühlte Wand des Blasformwerkzeugs, wo der Kunststoff abkühlt, erhärtet und die endgültige Form des Formteils annimmt,

6. Öffnen der Form und Entformen des blasgeformten Teils,

7. Entfernen der abgequetschten "Butzen"-Abfälle" an beiden Enden des Blasformteils.

Weitere Schritte der Nachbearbeitung können folgen.

Mittels Standard-Extrusionsblasformen lassen sich auch Bauteile mit komplexer Geometrie und mehrachsigen Krummungen herstellen. Allerdings werden dann Formteile erhalten, die einen großen Anteil von überschüssigem, abgequetschtem Material enthalten und in großen Bereichen eine Schweißnaht aufweisen.

Beim 3D-Extrusionsblasformen, auch als 3D-Blasformen bezeichnet, wird daher zur Vermeidung von Schweißnähten und zur Reduktion des Materialeinsatzes ein in seinem Durchmesser auf den Artikelquerschnitt angepasster Vorformling mit speziellen Vorrichtungen deformiert und manipuliert und dann direkt in die Blasformkavität eingebracht. Die verbleibende Quetschkante wird somit auf ein Minimum an den Artikelenden reduziert (Thielen, Hartwig, Gust, "Blasformen von Kunststoffhohlkörpem", Carl Hanser Verlag, München 2006, Seite 117-122).

Beim Saugblasformverfahren, auch als Saugblasen bezeichnet, wird der Vorformling direkt aus der Düse des Schlauchkopfes in die geschlossene Blasform gefördert und über einen Luftstrom durch die Blasform hindurch"gesaugt". Nach Austritt des unteren Endes des Vorformlings aus der Blasform wird dieser durch Schließelemente oben und unten abgequetscht, und der Aufblas- und Kühlvorgang schließen sich an (Thielen, Hartwig, Gust, "Blasformen von Kunststoffhohlkörpern", Carl Hanser Verlag, München 2006, Seite 123).

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Polyamide mit mittlerer und normaler Schmelzeviskosität, also Produkte mit einer relativen Viskosität $\eta$ rel $\approx$ 3,0 (gemessen in 1 %iger Lösung von Polyamid in meta-Kresol bei 25°C) eignen sich nicht für den erfindungsgemäßen Einsatz beim Extrusionsblasformen, da sich die extrudierten Vorformlinge unter ihrem Eigengewicht zu stark auslängen. Für die Verarbeitung mittels Extrusionsblasformen wird daher eine möglichst hohe Schmelzeviskosität im Bereich niedriger Scherraten benötigt. Erfindungsgemäß bevorzugte Polyamide für das Extrusionsblasformen sind entweder hochmolekulare, verzweigte Polyamide oder vernetzte Polyamide. Es handelt sich dabei um Polyamide mit nicht-Newtonschem Fließverhalten, die einen Anstieg der Schmelzeviskosität mit abnehmender Scherkraft zeigen. Dieses Phänomen wird auch als Strukturviskosität bezeichnet. Eine newtonsche Flüssigkeit (nach Isaac Newton) ist eine Flüssigkeit deren Scherspannung (auch Schubspannung) $\tau$ proportional zur Verzerrungsgeschwindigkeit (besser Schergeschwindigkeit) d *u*/d *y* ist:

$$\tau = \eta \frac{\mathrm{d}\,u}{\mathrm{d}\,y};$$

Hierbei ist u die Strömungsgeschwindigkeit parallel zur Wand und y die Ortskoordinate normal zur Wand. Die Proportionalitätskonstante $\eta$ wird auch als dynamische Viskosität bezeichnet. Newtonsche Fluide sind z.B. Wasser, viele Öle und Gase. Die Bewegung der newtonschen Fluide wird durch die Gleichungen von Navier-Stokes beschrieben.

Erfindungsgemäß zur Lagerung in den erfindungsgemäß herzustellenden Gastanks vorgesehene Gase sind Edelgase, Erdgas, Flüssiggas, Autogas, $C_1$-$C_4$-Kohlenwasserstoffe, bevorzugt Methan, Ethan, Propan oder Butan, sowie Stickstoff, Schwefelwasserstoff, Wasserstoff oder sonstige in der Industrie genutzte Gase wie Ammoniak oder Schwefelwasserstoff. Da die Anwendung der Gastanks in Kraftfahrzeugen bevorzugt ist, ist die Lagerung von Erdgas, Flüssiggas, Autogas oder der $C_1$-$C_4$-Kohlenwasserstoffe erfindungsgemäß bevorzugt. Neben den oben genannten Fahrzeugen sind aber auch Lagertanks oder Transporttanks für die genannten Gase vom Umfang der vorliegenden Erfindung mit umfasst, die nicht zum Antrieb von Fahrzeugen dienen.

Die erfindungsgemäß einzusetzende thermoplastische Formmasse erfüllt folgende Parameter:

- Hohe Schlagzähigkeit, insbesondere auch bei tiefer Temperatur
- Geringe Permeabilität gegenüber Kraftstoffen, insbesondere Kohlenwasserstoffen
- Hohe Schmelzeviskosität (Verarbeitung mittels Extrusionsblasformen)

Die vorliegende Erfindung betrifft aber auch ein Verfahren zur Vergleichmäßigung der Belastung des innenliegenden Kunststoffinliners in Druckbehältern bzw. zur Reduktion von auftretenden Spannungen, dadurch gekennzeichnet, dass der Inliner mit einer äußeren Verstärkungsschicht, bevorzugt aus einem faserverstärkten Material, besonders bevorzugt aus Kohle- und/oder Glasfasern, oder Metall, bevorzugt als flächiges Blech oder als Metallgerüst als Außenhülle versehen ist, wobei der Inliner im Übergangsbereich zwischen dem zylindrischen Behälterbereich und den Endbereichen bzw. Kappen Fixierungselemente aufweist.

Zur Klarstellung sei angemerkt, dass vom Rahmen der Erfindung alle vorstehend aufgeführten, allgemeinen oder in Vorzugsbereichen genannten Definitionen und Parameter in beliebigen Kombinationen umfasst sind.

**Beispiele:**

Die vorliegende Erfindung sei anhand der Fig. 1 für einen Druckbehälter mit umlaufender Rippe und anhand Fig. 2 für einen Druckbehälter mit segmentierter Rippe dargestellt.. Beispielhaft sind in Fig. 1 zwei verschiedene Rippenformen als Schnitt AA dargestellt. Weitere Rippenformen sind jedoch möglich.

## Patentansprüche

1. Zylindrische Druckbehälter, **dadurch gekennzeichnet, dass** dieser einen innenliegenden Kunststoffliner aufweist, der mit einer äußeren Verstärkungsschicht als Außenhülle versehen ist, wobei der innenliegende Kunststoffliner im Übergangsbereich zwischen dem zylindrischen Behälterbereich und den Endbereichen bzw. Kappen Fixierungselemente aufweist.

2. Zylindrische Druckbehälter gemäß Anspruch 1, **dadurch gekennzeichnet, dass** die äußere Verstärkungsschicht aus einem faserverstärkten Material oder Metall gefertigt ist.

3. Zylindrische Druckbehälter gemäß Anspruch 2, **dadurch gekennzeichnet, dass** als faserverstärktes Material Kohle- und/oder Glasfasern eingesetzt werden.

4. Zylindrische Druckbehälter gemäß Anspruch 2, **dadurch gekennzeichnet, dass** als Metall flächiges Blech oder ein Metallgerüst eingesetzt wird.

5. Zylindrische Druckbehälter gemäß der Ansprüche 1 bis 4, **dadurch gekennzeichnet, dass** die Fixierungselemente als am Umfang umlaufende Rippen oder segmentierte Rippen ausgeführt werden die durch Ihre Form einen Formschluss mit der äußeren Verstärkungsschicht aufweisen.

6. Zylindrische Druckbehälter gemäß einem der Ansprüche 1 bis 5, **dadurch gekennzeichnet, dass** die Anzahl der Fixierungselemente bei mindestens zwei, d.h. mindestens einem an jedem Übergang des zylindrischen Teils zu einer Endkappe, liegt.

7. Zylindrischer Druckbehälter gemäß Anspruch 6, **dadurch gekennzeichnet, dass** je nach Länge des Druckbehälters mehr als zwei Fixierungselemente notwendig werden.

8. Zylindrischer Druckbehälter gemäß der Ansprüche 1 bis 7, **dadurch gekennzeichnet, dass** der innenliegende Kunststoffliner segmentiert ist und die Endbereiche bzw. Endkappen mit dem zylindrischen Bereich via Schweiß- oder Klebetechnik verbunden sind.

9. Zylindrischer Druckbehälter gemäß der Ansprüche 1 bis 8 **dadurch gekennzeichnet, dass** der innenliegende Kunststoffinliner wenigstens einen Thermoplast umfasst, bevorzugt wenigstens ein Thermoplast der Reihe Polyolefine, Polyamide, Polyimide, Polyether, Polyester, Polyphenylensulfid (PPS), Polycarbonate und/oder Polyalkylene oder eine Kombination verschiedener Thermoplaste eingesetzt wird.

10. Verwendung der zylindrischen Druckbehälter gemäß der Ansprüche 1 bis 9 zur Speicherung von Gas für Gasbetriebene oder Gas-transportierende Fahrzeuge, bevorzugt Kraftfahrzeugen, Tankwagen, Kesselwagen, Eisenbahncontainern oder Wechselcontainern.

11. Verfahren zur Vergleichmäßigung der Belastung des innenliegenden Kunststoffinliners in zylindrischen Druckbehältern bzw. zur Reduktion von auftretenden Spannungen, **dadurch gekennzeichnet, dass** der Inliner mit einer äußeren Verstärkungsschicht, bevorzugt aus einem faserverstärkten Material, besonders bevorzugt aus Kohle- und/oder Glasfasern, oder Metall, bevorzugt als flächiges Blech oder als Metallgerüst als Außenhülle versehen ist, wobei der Inliner im Übergangsbereich zwischen dem zylindrischen Behälterbereich und den Endbereichen bzw. Kappen Fixierungselemente aufweist.

12. Verfahren zur Herstellung von zylindrischen Druckbehältern **dadurch gekennzeichnet, dass** innenliegende Kunststoffliner, die im Übergangsbereich zwischen dem zylindrischen Behälterbereich und den Endbereichen bzw. Kappen Fixierungselemente aufweisen über gängige Kunststoffverarbeitungsverfahren, besonders bevorzugt über das Extrusionsblasformen, durch geeignete Blaswerkzeuggestaltung realisiert werden oder über das Segmentieren des Liners in den zylindrischen Bereich und 2 Endbereiche (Endkappen) realisiert werden.

Fig. 1

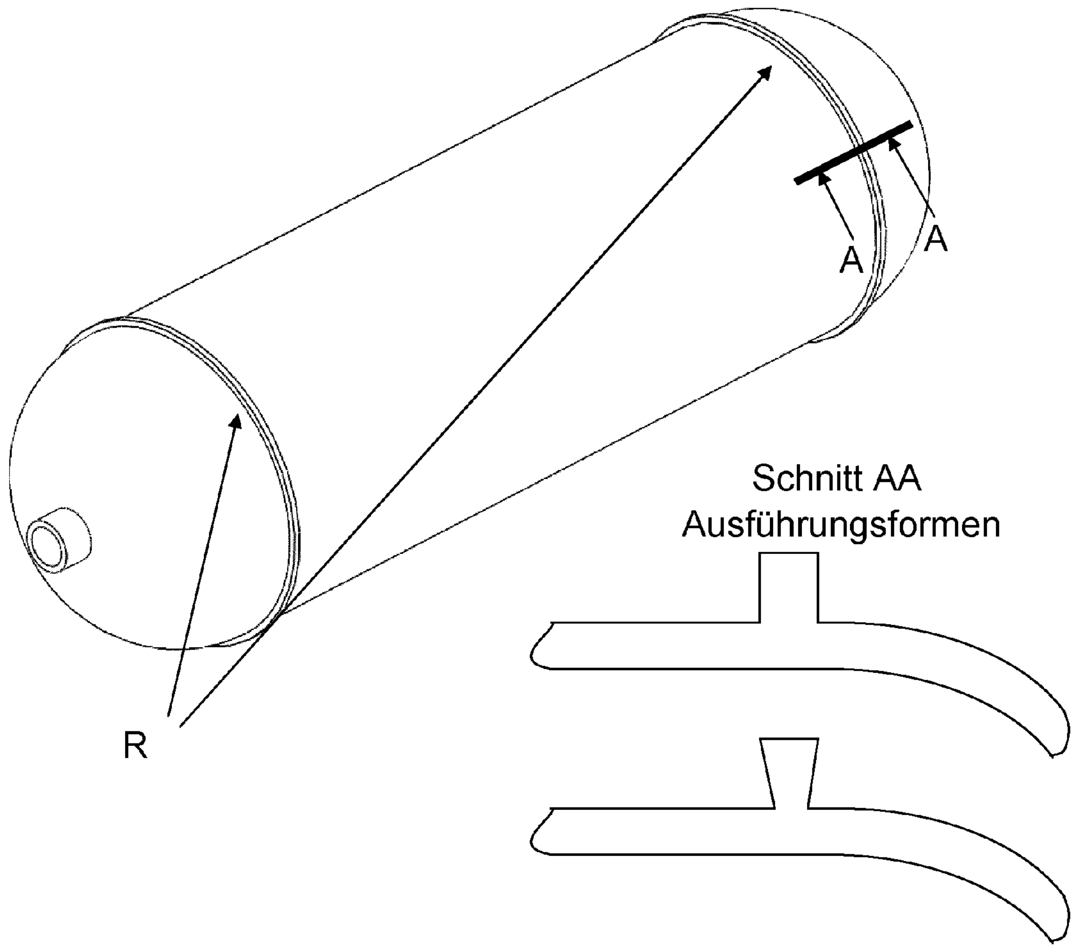

Fig. 2

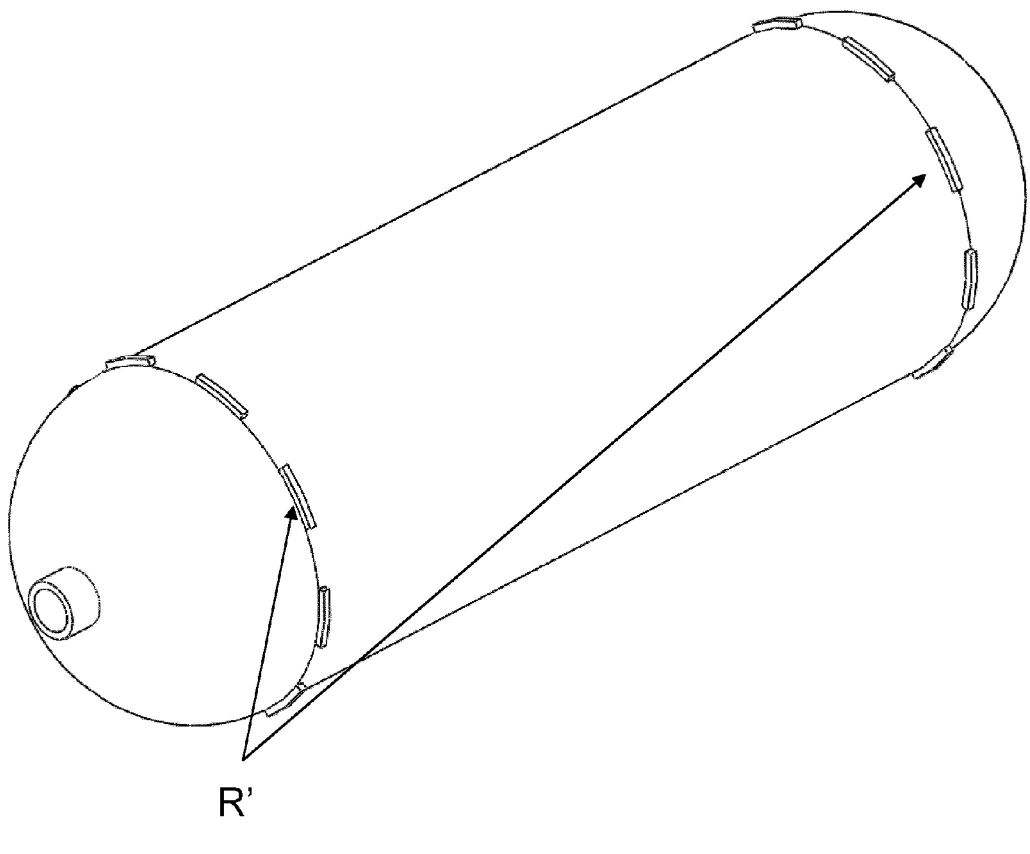

Europäisches Patentamt
European Patent Office
Office européen des brevets

# EUROPÄISCHER RECHERCHENBERICHT

Nummer der Anmeldung
EP 12 15 5440

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/095796 A1 (PRAKASH AMIT [US]) 16. April 2009 (2009-04-16) * Absätze [0002], [0010], [0011], [0015], [0023], [0025] * * Abbildungen 1,2 * ----- | 1-7,9-11 | INV. F17C1/06 F17C1/16 B29C53/60 B29C63/24 |
| X | FR 2 305 656 A1 (AMALGA CORP [US]) 22. Oktober 1976 (1976-10-22) * Ansprüche; Abbildungen * * Seite 4, Zeile 24 - Zeile 34 * * Seite 6, Zeile 5 - letzte Zeile * ----- | 1-3,5,9, 11,12 | |
| X | FR 1 272 354 A (MINNESOTA MINING & MFG) 22. September 1961 (1961-09-22) * Seite 2 - Seite 3, linke Spalte, Zeile 15 * * Seite 3, linke Spalte, Zeile 57 - rechte Spalte, Zeile 6 * * Abbildungen 1,2 * ----- | 1-3,6,8, 11,12 | |
| X | US 5 758 796 A (NISHIMURA YASUHIRO [JP] ET AL) 2. Juni 1998 (1998-06-02) | 12 | RECHERCHIERTE SACHGEBIETE (IPC) |
| A | * Spalte 1, Zeile 5 - Zeile 11 * * Spalte 6, Zeile 58 - Zeile 67 * * Spalte 7, Zeile 42 - Zeile 53 * ----- | 1-11 | B29C F17C |
| A | US 4 619 374 A (YAVORSKY WILLIAM M [US]) 28. Oktober 1986 (1986-10-28) * Spalte 5, Zeile 19 - Spalte 6, Zeile 21 * * Abbildungen 1,2 * ----- | 1,2,5,8, 12 | |
| A | DE 86 19 754 U1 (FELTEN & GUILLEAUME ENERGIETECHNIK) 11. September 1986 (1986-09-11) * Ansprüche 1,5; Abbildung 1a * ----- | 1 | |

Der vorliegende Recherchenbericht wurde für alle Patentansprüche erstellt

| Recherchenort | Abschlußdatum der Recherche | Prüfer |
|---|---|---|
| München | 27. Juni 2012 | Lanaspeze, Jean |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 12 15 5440

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-06-2012

| Im Recherchenbericht angeführtes Patentdokument | Datum der Veröffentlichung | Mitglied(er) der Patentfamilie | Datum der Veröffentlichung |
|---|---|---|---|
| US 2009095796 A1 | 16-04-2009 | KEINE | |
| FR 2305656 A1 | 22-10-1976 | KEINE | |
| FR 1272354 A | 22-09-1961 | KEINE | |
| US 5758796 A | 02-06-1998 | CN 1148679 A | 30-04-1997 |
| | | JP 9096399 A | 08-04-1997 |
| | | US 5758796 A | 02-06-1998 |
| US 4619374 A | 28-10-1986 | BE 906090 A1 | 16-04-1987 |
| | | US 4619374 A | 28-10-1986 |
| | | US 4740262 A | 26-04-1988 |
| DE 8619754 U1 | 11-09-1986 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 8053523 B2
- EP 1333060 A1
- EP 0810081 A
- EP 1260755 A
- EP 1538110 A
- WO 2007074098 A1
- WO 2001066643 A1
- DE 202010017414 U
- EP 0208187 A2
- EP 0050265 A1
- US 4148846 A
- US 4327201 A
- DE 3725576 A1
- EP 0235690 A2
- DE 3800603 A1
- EP 0319290 A1


### In der Beschreibung aufgeführte Nicht-Patentliteratur


- **HOUBEN-WEYL.** Methoden der organischen Chemie. Georg-Thieme-Verlag, 1961, vol. 14-1, 392-406
- **C. B. BUCKNALL.** Toughened Plastics. Applied Science Publishers, 1977
- Plastics Additives Handbook. Hanser-Verlag, 2001, 460-462
- **SMITH, MARCH.** March's Advanced Organic Chemistry. Wiley-Interscience, 2001
- **GÄCHTER, MÜLLER.** Kunststoff-Additive. Hanser-Verlag, 1989
- Plastics Additives Handbook. Hanser-Verlag, 2001
- **THIELEN ; HARTWIG ; GUST.** Blasformen von Kunststoffhohlkörpern. Carl Hanser Verlag, 2006, 15-17
- **THIELEN ; HARTWIG ; GUST.** Blasformen von Kunststoffhohlkörpem. Carl Hanser Verlag, 2006, 117-122
- **THIELEN ; HARTWIG ; GUST.** Blasformen von Kunststoffhohlkörpern. Carl Hanser Verlag, 2006, 123
- **THIELEN ; HARTWIG ; GUST.** Blasformen von Kunststoffhohlkörpern. Carl Hanser Verlag, 2006, 127-129